(19) Europäisches Patentamt / European Patent Office / Office européen des brevets

(11) **EP 4 113 162 A1**

(12) **EUROPEAN PATENT APPLICATION**
published in accordance with Art. 153(4) EPC

(43) Date of publication:
**04.01.2023 Bulletin 2023/01**

(21) Application number: **20921466.7**

(22) Date of filing: **28.02.2020**

(51) International Patent Classification (IPC):
**G01S 7/491** (2020.01)

(52) Cooperative Patent Classification (CPC):
**G01S 7/491**

(86) International application number:
**PCT/CN2020/077277**

(87) International publication number:
**WO 2021/168832 (02.09.2021 Gazette 2021/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129, (CN)**

(72) Inventors:
- **ZHAO, Wen**
  **Shenzhen, Guangdong 518129 (CN)**
- **XIONG, Wei**
  **Shenzhen, Guangdong 518129 (CN)**
- **XIE, Chengzhi**
  **Shenzhen, Guangdong 518129 (CN)**
- **YAN, Lei**
  **Shenzhen, Guangdong 518129 (CN)**
- **LI, Jun**
  **Shenzhen, Guangdong 518129 (CN)**

(74) Representative: **Körber, Martin Hans**
**Mitscherlich PartmbB**
**Patent- und Rechtsanwälte**
**Sonnenstraße 33**
**80331 München (DE)**

(54) **LASER DETECTION SYSTEM AND VEHICLE**

(57) A laser detection system and a vehicle are provided, which may be applied to the field of autonomous driving, connected vehicles, or the like, to resolve interference of ambient light to a laser detection system due to impact of a temperature drift of a laser in the conventional technology. The laser detection system includes: a laser, configured to emit a laser beam to a detection region; a grating component, configured to: split a light signal from the detection region to obtain first spectra with different center wavelengths, concentrate light energy of the light signal on a first spectrum whose center wavelength is equal to a wavelength of the laser beam, to obtain a first reflected light signal, and transmit the first reflected light signal to a detection component, where a spectral width of the first reflected light signal is less than a spectral width of the light signal, and the first reflected light signal is a signal obtained after the laser beam is reflected by a target in the detection region; and the detection component, configured to convert the first reflected light signal received from the grating component into a first reflected electrical signal for storage. In this way, the interference of the ambient light to the laser detection system can be reduced.

FIG. 2

EP 4 113 162 A1

## Description

### TECHNICAL FIELD

This application relates to the field of detection technologies, and in particular, to a laser detection system and a vehicle.

### BACKGROUND

Light detection and ranging (light detection and ranging, LiDAR) is a radar system that emits a laser beam to detect features such as a location and a speed of a target. A working principle of LiDAR is as follows: A light source transmits a detection signal (laser beam) to a target (for example, a vehicle, an aircraft, or a missile), and then, a signal (reflected light signal) reflected from the target is compared with the transmitted signal and is processed, to obtain information related to the target, for example, parameters such as a distance, an orientation, a height, a speed, a posture, and even a shape of the target, so as to detect, track, and recognize the target.

In recent years, LiDAR is more applied to an advanced driver-assistance system (advanced driving assistant system, ADAS), gesture recognition, three-dimensional (three dimensional, 3D) mapping, and another application. Especially, in the field of vehicles, with a trend of sensor fusion, LiDAR is combined with imaging, ultrasonic, and millimeter-wave radars to provide all-round perception for the vehicles and pave a way for safer autonomous driving. Currently, a silicon photomultiplier (silicon photomuliplier, SiPM) laser radar has features such as a high gain, high detection efficiency, a fast response, excellent time resolution, and a wide-spectrum response, and can greatly improve a signal collection speed and a signal resolution capability of the laser radar.

However, the SiPM laser radar is affected by a temperature drift of a laser. Therefore, a light filter in the SiPM laser radar allows a wide pass-through wavelength range. Consequently, ambient light causes great interference to a detector in the SiPM laser radar.

### SUMMARY

This application provides a laser detection system and a vehicle, to resolve interference of ambient light to a laser detection system due to impact of a temperature drift of a laser in the conventional technology.

According to a first aspect, this application provides a laser detection system. The laser detection system includes a laser, a grating component, and a detection component. The laser is configured to emit a laser beam to a detection region, that is, the laser emits the laser beam to the detection region. The grating component is configured to: receive a light signal from the detection region, split the light signal to obtain first spectra with different center wavelengths, concentrate light energy of the light signal on a first spectrum whose center wavelength is equal to a wavelength of the laser beam, to obtain a first reflected light signal, and transmit the first reflected light signal to the detection component. The first reflected light signal is a signal obtained after the laser beam is reflected by a target in the detection region, and a spectral width of the first reflected light signal is less than a spectral width of the light signal. The detection component is configured to convert the first reflected light signal received from the grating component into a first reflected electrical signal for storage.

Based on this solution, the grating component splits the light signal, and concentrates the light energy of the light signal on the first spectrum whose center wavelength is equal to the wavelength of the laser beam, to obtain the first reflected light signal. Because the light energy of the light signal is concentrated on the first spectrum whose center wavelength is equal to the wavelength of the laser beam, the first reflected light signal whose spectral width is less than the spectral width of the light signal can be obtained. In addition, neither splitting the light signal by the grating component nor concentrating the light energy of the light signal on the first spectrum whose center wavelength is equal to the wavelength of the laser beam is affected by a temperature drift of the laser. In this way, interference of ambient light to the laser detection system can be reduced while the temperature drift of the laser is considered, to increase a ranging range of the laser detection system.

In this application, the following three structures of the grating component are provided as examples.

In a structure 1, the grating component is a first blazed grating.

Based on the structure 1, the detection component is a detector.

In a possible implementation, the first blazed grating is configured to: receive the light signal from the detection region, split the light signal to obtain the first spectra with the different center wavelengths, concentrate the light energy of the light signal on the first spectrum whose center wavelength is equal to the wavelength of the laser beam, to obtain the first reflected light signal, and transmit the first reflected light signal to the detector.

The first blazed grating in the structure 1 can split (or filter) a light signal with a wider spectral width to obtain first spectra with a narrower spectral width, and concentrate the light energy of the light signal on the first spectrum whose center wavelength is equal to the wavelength of the laser beam, to obtain the first reflected light signal. In other words, the detector receives the first reflected light signal. Therefore, the interference of the ambient light to the laser detection system can be reduced, to increase the ranging range of the laser detection system.

In a possible implementation, the laser detection system may further include a light splitting component. The light splitting component is configured to transmit the laser beam from the laser to the first blazed grating, and reflect the first reflected light signal from the first blazed grating to the detector.

Further, optionally, the optical detection system may further include an optical focusing component. The detector is located on an image-space focal plane of the optical focusing component. The optical focusing component is configured to focus the first reflected light signal from the first blazed grating on the image-space focal plane, and transmit a focused first reflected light signal to the detector.

The optical focusing component can be used to input the first reflected light signal to the detector as much as possible, to improve utilization of the first reflected light signal, and can be also used to shorten a focusing light path, to help miniaturize the laser detection system.

In a structure 2, the grating component includes a first blazed grating and a second blazed grating.

Based on the structure 2, the detection component includes a detector array, and one center wavelength range of the first reflected light signal corresponds to one detector in the detector array.

In a possible implementation, the first blazed grating is configured to: receive the light signal from the detection region, split the light signal to obtain second spectra with different center wavelengths, concentrate the light energy of the light signal on a second spectrum whose center wavelength is equal to the wavelength of the laser beam, to obtain a second reflected light signal, and transmit the second reflected light signal to the second blazed grating. The second blazed grating is configured to: re-split the received second reflected light signal to obtain the first spectra with the different center wavelengths, concentrate light energy of the second reflected light signal on the first spectrum whose center wavelength is the wavelength of the laser beam, to obtain the first reflected light signal, and transmit the first reflected light signal to a corresponding detector. The spectral width of the first reflected light signal is less than a spectral width of the second reflected light signal.

The grating component in the structure 2 is of a two-stage series-connected structure including the first blazed grating and the second blazed grating. The second reflected light signal is obtained by using the first blazed grating. The spectral width of the second reflected light signal is less than the spectral width of the light signal, to reduce impact of the ambient light on the laser detection system. Further, the second blazed grating further concentrates the energy of the second reflected light signal on the first spectrum whose center wavelength is equal to the wavelength of the laser beam, to obtain the first reflected light signal. The spectral width of the first reflected light signal is less than the spectral width of the second reflected light signal, so that the spectral width of the first reflected light signal transmitted to the detector can be further reduced, to further reduce the impact of the ambient light on the laser detection system, so as to further increase the ranging range of the laser detection system.

Further, optionally, the laser detection system further includes an optical focusing component, and the detector array is located on an image-space focal plane of the optical focusing component. The optical focusing component is configured to focus the first reflected light signal from the second blazed grating on an image-space focal plane, and transmit a focused first reflected light signal to the corresponding detector.

The optical focusing component can be used to input more first reflected light signals to a corresponding detector as much as possible, to improve utilization of the first reflected light signals, and can be also used to shorten a focusing light path, to help miniaturize the laser detection system.

In a possible implementation, the laser detection system further includes a light splitting component. The light splitting component is configured to transmit the laser beam from the laser to the first blazed grating, and reflect the second reflected light signal from the first blazed grating to the second blazed grating.

In a structure 3, the grating component includes a first blazed grating and a fiber grating array.

Based on the structure 3, the detection component includes a detector array, detectors in the detector array are in a one-to-one correspondence with fiber gratings in the fiber grating array, and one center wavelength range of the second reflected light signal corresponds to one fiber grating in the fiber grating array.

In a possible implementation, the first blazed grating is configured to: receive the light signal from the detection region, split the light signal to obtain second spectra with different center wavelengths, concentrate the light energy of the light signal on a second spectrum whose center wavelength is equal to the wavelength of the laser beam, to obtain a second reflected light signal, and transmit the second reflected light signal to a corresponding fiber grating. Each fiber grating in the fiber grating array is configured to re-split the received corresponding second reflected light signal to obtain the first spectra with the different center wavelengths, concentrate light energy of the second reflected light signal on the first spectrum whose center wavelength is equal to the wavelength of the laser beam, to obtain the first reflected light signal, and transmit the first reflected light signal to a detector corresponding to the fiber grating. The spectral width of the first reflected light signal is less than a spectral width of the second reflected light signal.

The grating component in the structure 3 is of a two-stage series-connected structure including the first blazed grating and the fiber grating. The second reflected light signal is obtained by using the first blazed grating. The spectral width of the second reflected light signal is less than the spectral width of the light signal, to reduce impact of the ambient light on the laser detection system. Further, the fiber grating further concentrates the energy of the second reflected light signal on the first spectrum whose center wavelength is equal to the wavelength of the laser beam, to obtain the first reflected light signal, and the spectral width of the first reflected light signal is less than the spectral width of the second reflected light signal, so that the spectral width of the first reflected light signal transmitted to the detector can be further reduced, to reduce the impact of the ambient light on the laser detection system, so as to further increase the ranging range of the laser detection system.

Further, optionally, the laser detection system further includes an optical focusing component. An ingress port of each fiber grating in the fiber grating array is located on an image-space focal plane of the optical focusing component. The optical focusing component is configured to focus the second reflected light signal from the first blazed grating on the image-space focal plane, and couple a focused second reflected light signal into the corresponding fiber grating.

The optical focusing component can be used to input more second reflected light signals to a corresponding fiber grating as much as possible, to improve utilization of the second reflected light signals, and can be also used to shorten a focusing light path, to help miniaturize the laser detection system.

In a possible implementation, the laser detection system may further include a light splitting component and a reflector. The light splitting component is configured to transmit the laser beam from the laser to the reflector. The reflector is configured to reflect the laser beam from the light splitting component to the detection region, and reflect the light signal from the detection region to the light splitting component. The light splitting component is further configured to reflect the light signal from the reflector to the first blazed grating.

The laser beam is reflected to the detection region by using the reflector, to help shorten a light path, so as to help miniaturize the laser detection system.

In this application, an interval $p$ of the first blazed grating meets $\theta_{out} = sin^{-1}\left(sin\,\theta_{in} + \frac{\lambda_i}{p}\right)$. $\lambda_i$ is a center wavelength of incident light transmitted to the first blazed grating, $\theta_{in}$ is an incident angle between the incident light and a normal of the first blazed grating, and $\theta_{out}$ is an emergent angle between emergent light transmitted from the first blazed grating and the normal of the first blazed grating.

The interval of the first blazed grating is designed, to concentrate the light energy of the light signal on the first spectrum whose center wavelength is equal to the wavelength of the laser beam.

In a possible implementation, the laser detection system further includes a scanning component. The scanning component is configured to: receive the laser beam from the laser, separately emit the laser beam to the detection region at different detection angles, and transmit the light signal from the detection region to the grating component.

The scanning component can be used to scan the detection region, to accurately determine associated information of the target in the detection region.

According to a second aspect, this application provides a vehicle. The vehicle includes a processor and the laser detection system according to any one of the first aspect or the possible implementations of the first aspect. The processor is configured to plan a traveling path of the vehicle based on a first reflected electrical signal from the laser detection system.

For technical effects that can be achieved in the second aspect, refer to the descriptions of the beneficial effects in the first aspect. Details are not described herein again.

**BRIEF DESCRIPTION OF DRAWINGS**

FIG. 1 is a schematic diagram of a principle of detecting a target by a laser radar according to this application;
FIG. 2 is a schematic diagram of a structure of a laser detection system according to this application;
FIG. 3a is a schematic diagram of a waveform of a light signal according to this application;
FIG. 3b is a schematic diagram of a waveform of a first reflected light signal according to this application;
FIG. 3c is a schematic diagram of a waveform of a second reflected light signal according to this application;
FIG. 4a is a schematic diagram of a structure of a first blazed grating according to this application;
FIG. 4b is a schematic diagram of a light path passing through a grating component according to this application;
FIG. 4c is a schematic diagram of another light path passing through a grating component according to this application;
FIG. 5a is a schematic diagram of still another light path passing through a grating component according to this application;
FIG. 5b is a schematic diagram of still another light path passing through a grating component according to this application;

FIG. 6a is a schematic diagram of a structure of a fiber grating according to this application;

FIG. 6b is a schematic diagram of still another light path passing through a grating component according to this application;

FIG. 6c is a schematic diagram of still another light path passing through a grating component according to this application;

FIG. 7a is a schematic diagram of a principle of light splitting by a PBS according to this application;

FIG. 7b is a schematic diagram of a principle of light splitting by a fiber circulator according to this application;

FIG. 8a is a schematic diagram of a structure of an optical focusing component according to this application;

FIG. 8b is a schematic diagram of a location relationship between an optical focusing component and a fiber grating array according to this application;

FIG. 9 is a schematic diagram of a structure of a scanning component according to this application;

FIG. 10 is a schematic diagram of a structure of a light beam emitting component according to this application;

FIG. 11 is a schematic diagram of a structure of a light beam receiving component according to this application;

FIG. 12 is a schematic diagram of a structure of another laser detection system according to this application;

FIG. 13 is a schematic diagram of a structure of still another laser detection system according to this application;

FIG. 14 is a schematic diagram of a structure of still another laser detection system according to this application; and

FIG. 15 is a schematic diagram of a structure of a vehicle according to this application.

## DESCRIPTION OF EMBODIMENTS

To make the objectives, technical solutions, and advantages of this application clearer, the following further describes this application in detail with reference to the accompanying drawings.

The following explains and describes some terms in this application, to help a person skilled in the art have a better understanding.

(1) Silicon photomultiplier (silicon photomuliplier, SiPM)

The SiPM is a photodetector, includes a plurality of avalanche photodiodes (avalanche photodiodes, APDs) arrays, and has features such as a high gain, high detection efficiency, a fast response, excellent time resolution, and a wide-spectrum response. Each APD is referred to as a pixel (or referred to as a micro element) of the SiPM. After detecting a photon, each pixel generates a pulse of a same amplitude. An output signal of the SiPM is superposition of pulse signals of all pixels at a same time.

The SiPM has a $10^6$-level internal gain. When a single photon is incident, a readable signal can be also generated, to enable the SiPM to have single-photon-level sensitivity. In this case, a reflected weak laser signal can be also detected even when laser power is low and a detection distance is long. The SiPM has a rise time less than 1 ns, to greatly improve a signal collection speed and a signal resolution capability of a laser radar.

(2) Blazed grating

When chromatic light (for example, ambient light) irradiates a grating, diffractive light, that is of a same order and that has different wavelengths, other than zero-order diffractive light does not overlap, that is, the grating can implement light splitting. The light splitting of the grating generates a plurality of orders of spectra at the same time. In this way, distribution of energy of the grating during light splitting is scattered, and energy of a spectrum of each order is very weak. Especially, a zero-order spectrum occupies a large part of the energy, but the zero-order spectrum does not generate dispersion and cannot be used. A solution is to carve a sawtooth-shaped groove on a surface of the grating, that is, to form the blazed grating. Light energy of light transmitted to the blazed grating can be concentrated in a predetermined direction, that is, on a spectrum of an order. When detected from the predetermined direction, intensity of the spectrum of this order is highest. To be specific, after the grating performs light splitting, distribution of light energy of the spectrum of each order depends on a microscopic shape of the groove of the grating. Therefore, in a reflection grating, an included angle between a groove plane and a grating plane can be controlled, so that each groove plane highly concentrates the light energy in a direction like a mirror, that is, the light energy is concentrated on a spectrum of an order, to implement blazing of the spectrum of this order.

(3) Fiber grating

The fiber grating, also referred to as a fiber Bragg grating (fiber Bragg grating, FBG), is a fiber whose core refractive index changes periodically. Holographic interferometry, a phase mask method, or the like is used to expose a short segment of fiber, that is sensitive to light, to a light wave whose light intensity changes periodically. In this way, a refractive index of the short segment of fiber can correspondingly change permanently. When a beam of light is transmitted through the fiber Bragg grating, each short segment of fiber whose refractive index is changed can reflect only a light wave with a corresponding specific wavelength, namely, a Bragg wavelength, and the Bragg wavelength is related to an interval length between gratings. A light wave with another wavelength continues to be transmitted, so that the fiber Bragg grating reflects only the light with the specific wavelength.

A reflection wavelength of the fiber Bragg grating is affected by a grating characteristic (for example, a cycle or an interval of the FBG).

In this application, a laser detection system may be applied to the fields of advanced driver-assistance systems (advanced driving assistant systems, ADASs) (for example, autonomous driving), robots, uncrewed aerial vehicles, connected vehicles, safety protection monitors, and the like. For example, the laser detection system in this application may be applied to a laser radar system (for example, a SiPM laser radar system). The laser radar system includes but is not limited to a vehicle-mounted laser radar, an airborne laser radar, and the like. The laser radar system may be also referred to as a laser radar. In addition, the laser detection system may be alternatively installed on a mobile platform, for example, a satellite. In this case, the laser detection system needs assistance of another apparatus on the mobile platform to determine a current location and steering information of the laser detection system, to ensure availability of measured data. For example, the mobile platform may further include a global positioning system (global positioning system, GPS) apparatus and an inertial measurement unit (inertial measurement unit, IMU) apparatus. The laser detection system may obtain features such as a location and a speed of a target in combination with measured data from the GPS apparatus and the IMU apparatus. For example, the laser detection system may provide geographical location information of the mobile platform by using the GPS apparatus on the mobile platform, and record posture and steering information of the mobile platform by using the IMU apparatus. After a distance between the laser detection system and the target is determined based on a reflected light signal, a measurement point of the target may be converted into a location point in an absolute coordinate system from a relative coordinate system by using at least one of the geographical location information provided by the GPS apparatus or the posture and steering information provided by the IMU apparatus, to obtain geographical location information of the target, so that the laser detection system can be applied to the mobile platform.

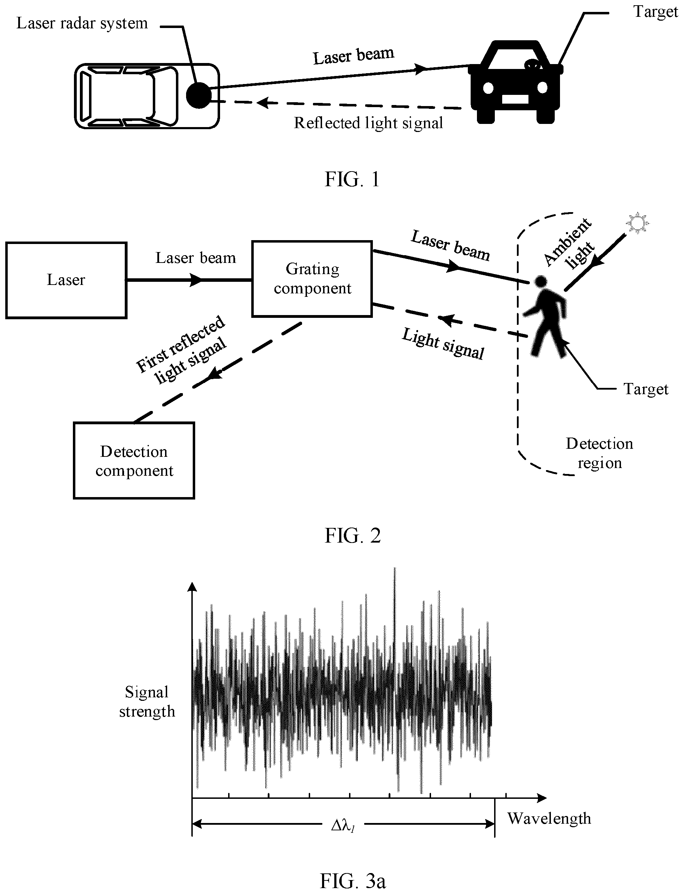

For ease of description, the following uses the laser radar system as an example to describe a working process of the laser detection system. The laser radar system usually works by emitting a high-frequency electromagnetic wave and receiving electromagnetic energy (namely, a reflected light signal) reflected by the target, and compares the received reflected light signal and an emitted laser beam, to extract information related to the target, such as the distance between the laser radar system to the target and a point cloud density of the target. FIG. 1 is a schematic diagram of a principle of detecting a target by a laser radar system according to this application. The laser radar system may include a laser and a detector. The laser is configured to emit a laser beam. If the target exists within a specific distance along an emission direction of the laser beam, the laser beam is reflected by the target. In FIG. 1, an example in which the target (for example, a car in FIG. 1) exists in the emission direction of the laser beam is used. After reaching the target, the laser beam emitted by the laser is reflected on a surface of the target, and a reflected signal is returned to the detector of the laser radar system as a reflected light signal. The detector is configured to determine information related to the target based on the received reflected light signal and the emitted laser beam.

Currently, in the working process of the laser detection system, because a wavelength range of a laser beam emitted by a laser in the laser detection system is affected by a temperature, a wavelength of the laser beam emitted by the laser drifts with a change of the temperature. Therefore, to reduce interference of ambient light to the laser detection system, currently, a light filter is usually disposed at a receive end (namely, a detector end). To also consider impact of a temperature drift of the laser, the light filter allows a wide pass-through wavelength range. In this way, a large amount of ambient light is still transmitted to the detector through the light filter, that is, the interference of the ambient light to the laser detection system is still severe. An existing solution is as follows: A vertical-cavity surface-emitting laser (vertical cavity surface emitting laser, VCSEL) with a small temperature drift range is used together with a narrow-band light filter of approximately 2 nm. However, processes of both a high-power VCSEL laser and a 2 nm narrow-band light filter are complex and immature, and it is difficult to implement mass production. In addition, a light emitting section of the high-power VCSEL laser is large, resulting in a large focal length of an emitting light path, and it is difficult to implement miniaturization of the laser detection system.

In view of the foregoing problems, this application provides a laser detection system. The laser detection system can reduce ambient light entering the laser detection system while a temperature drift of a laser is considered, to increase a ranging range of the laser detection system.

The following describes in detail the laser detection system provided in this application with reference to FIG. 2 to FIG. 14.

Based on the foregoing content, FIG. 2 is a schematic diagram of a structure of a laser detection system according to this application. The laser detection system may include a laser, a grating component, and a detection component. The laser is configured to emit a laser beam to a detection region. In other words, the laser is configured to emit the laser beam to the detection region. The grating component is configured to: receive a light signal from the detection region, split the light signal to obtain first spectra with different center wavelengths, concentrate light energy of the light signal on a first spectrum whose center wavelength is equal to a wavelength of the laser beam, to obtain a first reflected light signal, and transmit (for example, reflect or transmit) the first reflected light signal to the detection component. A spectral width of the first reflected light signal is less than a spectral width of the light signal, and the first reflected light signal is a signal obtained after the laser beam is reflected by a target in the detection region. The detection component is configured to convert the first reflected light signal received from the grating component into a first reflected electrical signal for storage.

The first reflected electrical signal may be used to determine associated information of the target in the detection region, for example, a distance, an orientation, a height, a speed, a posture, and a shape of the target, and physical characteristics (for example, reflectivity and roughness) of a reflective surface.

It should be noted that the light signal from the detection region refers to reflected light obtained after the light signal irradiates the target (for example, a person or an object), and the reflected light includes reflected light obtained after ambient light irradiates the target and reflected light obtained after the laser beam from the laser irradiates the target. In other words, the light signal from the detection region includes reflected light corresponding to the ambient light and a reflected light signal corresponding to the laser beam. In addition, the first spectrum whose center wavelength is equal to the wavelength of the laser beam is a spectrum of an order that is obtained by diffracting the light signal by using the grating component. For example, diffractive light may be of a $\pm 1$ order, or may be of another order. This is not limited in this application. In addition, a shape of the detection region shown in FIG. 2 is merely an example, and the detection region is not limited in this application.

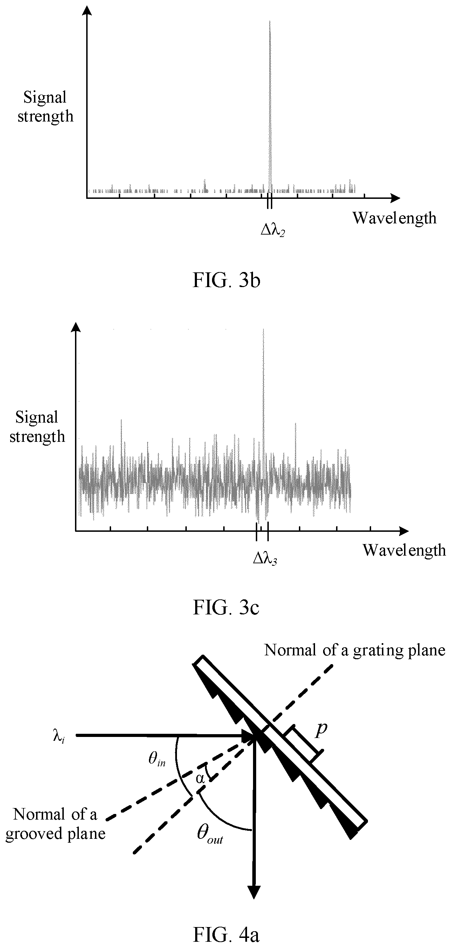

FIG. 3a is a schematic diagram of a simulated wavelength of a light signal according to this application. The light signal refers to a light signal from a detection region and includes reflected light corresponding to ambient light and a reflected light signal corresponding to a laser beam. It can be learned from FIG. 3a that interference of the ambient light in the light signal to the reflected light signal is severe, and a spectral width of the light signal is $\Delta\lambda_1$. FIG. 3b is a schematic diagram of a simulated wavelength of a first reflected light signal according to this application. Light intensity of the first reflected light signal is clearly higher than light intensity of ambient light, that is, there is a little interference of the ambient light to the first reflected light signal, and a spectral width of the first reflected light signal is $\Delta\lambda_2$. It can be learned from FIG. 3a and FIG. 3b that the spectral width $\Delta\lambda_2$ of the first reflected light signal is far less than the spectral width $\Delta\lambda_1$ of the light signal.

Based on the foregoing laser detection system, the grating component splits the light signal from the detection region to obtain first spectra that have a narrow spectral width and that have different center wavelengths, and concentrates light energy of the light signal on the first spectrum whose center wavelength is equal to the wavelength of the laser beam, to obtain the first reflected light signal. In other words, the spectral width of the first reflected light signal is less than the spectral width of the light signal. In addition, neither splitting the light signal by the grating component nor concentrating the light energy of the light signal on the first spectrum whose center wavelength is equal to the wavelength of the laser beam is affected by a temperature drift of the laser. In this way, interference of the ambient light to the laser detection system can be reduced while the temperature drift of the laser is considered, to increase a ranging range of the laser detection system.

The foregoing beneficial effects are described in detail with reference to a simulated result. The simulated result is simulated based on an existing SiPM laser radar system and the laser detection system shown in FIG. 2. Refer to Table 1. For example, a spectral width that is transmitted by the existing SiPM laser radar system to the detection component is 40 nm, and a spectral width of a first reflected light signal that is transmitted by the laser detection system shown in FIG. 2 to the detection component is 1 nm. It may be obtained, through simulation, that a detectable distance of the existing SiPM laser radar system is 90 m, and a detectable distance of the laser detection system shown in FIG. 2 is 155 m. In other words, a detection distance increases by 72% by using the laser detection system shown in FIG. 2.

**Table 1 Relationship between detection distance and laser detection system**

| Performance indicator | Existing SiPM laser radar system (spectral width: 40 nm) | Laser detection system in this application (spectral width: 1 nm) | Increase |
|---|---|---|---|
| Detectable distance | 90 m | 155 m | 72% |

The following describes each functional component and structure shown in FIG. 2, to provide an example of a specific implementation.

1. Laser

In this application, the laser is a light source of the laser detection system, and may be a semiconductor laser, a fiber laser, or the like. If the laser detection system is applied to vehicle-mounted light detection and ranging, the laser may emit a laser beam with a wavelength of 905 nm, or may emit a laser beam with a wavelength of 940 nm, or may emit a laser beam with a wavelength of 1550 nm.

In a possible implementation, the laser may be a vertical-cavity surface-emitting laser (vertical cavity surface emitting laser, VCSEL) or an edge-emitting laser (edge emitting laser, EEL). At different temperatures, center wavelengths of laser beams emitted by the laser may be different. For example, at a temperature $T_1$°C, a center wavelength of a laser beam emitted by the laser is $\lambda_1$, and at a temperature $T_2$°C, a center wavelength of a laser beam emitted by the laser is $\lambda_2$. $\lambda_1$ and $\lambda_2$ may be different. It should be understood that when the center wavelength of the laser beam emitted by the laser is $\lambda_1$, a center wavelength of a first reflected light signal is also $\lambda_1$. Alternatively, when the center wavelength of the laser beam emitted by the laser is $\lambda_2$, a center wavelength of the first reflected light signal is also $\lambda_2$.

2. Grating component

The grating component is configured to split the light signal to obtain the first spectra with the different center wavelengths, and concentrate the light energy of the received light signal on the first spectrum whose center wavelength is equal to the wavelength of the laser beam, to obtain the first reflected light signal. The following provides three possible structures of the grating component as examples.

In a structure 1, the grating component is a first blazed grating.

It may be also understood that a single-stage grating (namely, the first blazed grating) used as the grating component in the structure 1 splits the light signal from the detection region. In a possible implementation, the first blazed grating is configured to: receive the light signal from the detection region, split the light signal to obtain the first spectra with the different center wavelengths, concentrate the light energy of the light signal on the first spectrum whose center wavelength is equal to the wavelength of the laser beam to obtain the first reflected light signal, and transmit the first reflected light signal to the detection component.

FIG. 4a is a schematic diagram of a structure of a first blazed grating according to this application. An interval (which may be also referred to as a cycle) of the first blazed grating is p, an incident angle at which the light signal (namely, incident light) from the detection region is transmitted to the first blazed grating is $\theta_{in}$, an emergent angle of emergent light is $\theta_{out}$, and a center wavelength of the incident light is $\lambda_i$. The interval, the incident angle, the emergent angle, and the center wavelength meet the following Formula 1:

$$\theta_{out} = sin^{-1}\left(sin\,\theta_{in} + \frac{\lambda_i}{p}\right) \qquad\qquad \text{Formula 1}$$

In this application, the interval $p$ of the first blazed grating may be designed. In a possible implementation, after the incident angle and the incident wavelength are fixed, the emergent angle may be adjusted by designing the interval p, that is, an emergent direction of the first reflected light signal from the first blazed grating may be adjusted by designing the interval p. Further, optionally, the first blazed grating may be made from polyethylene terephthalate (polyethylene terephthalate, PET), polypropylene (polypropylene, PP), or polyvinyl chloride (polyvinyl chloride, PVC).

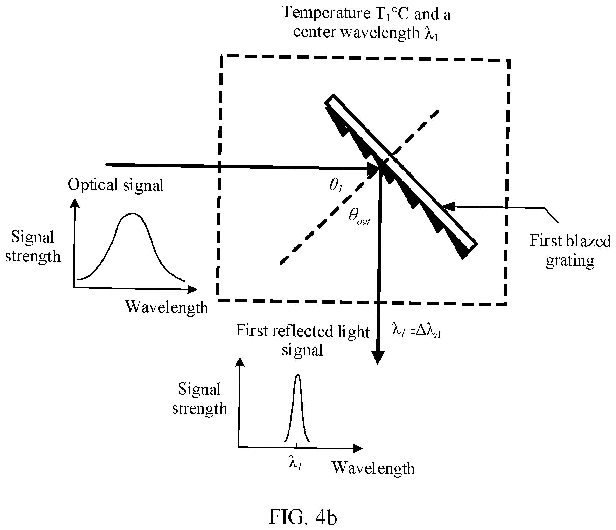

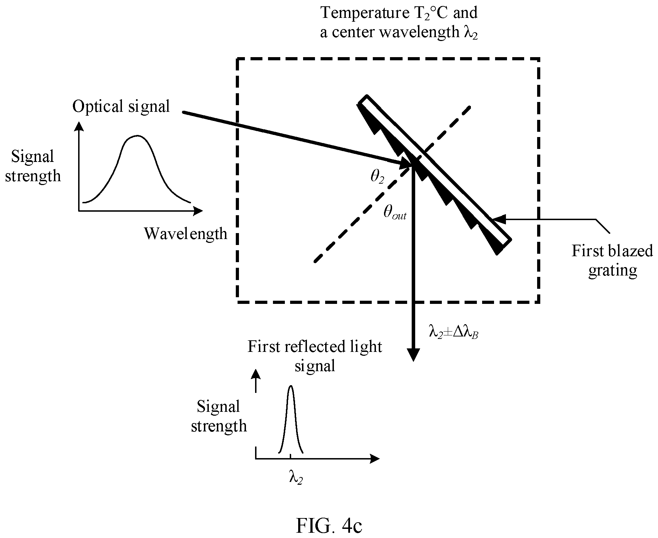

FIG. 4b and FIG. 4c are schematic diagrams of light paths passing through a grating component at two different temperatures ($T_1$°C and $T_2$°C) according to this application. The grating component is the first blazed grating. At the temperature $T_1$°C, the light signal from the detection region is transmitted to the first blazed grating at an incident angle $\theta_1$. The first blazed grating is configured to: receive the light signal from the detection region, split the light signal to obtain the first spectra with the different center wavelengths, and concentrate the light energy of the light signal from the detection region on the first spectrum whose center wavelength is equal to the wavelength of the laser beam, to obtain a first reflected light signal whose center wavelength is $\lambda_1$. A spectral width of the first light signal is $\Delta\lambda_A$, and an emergent angle of the first reflected light signal on the first blazed grating is $\theta_{out}$. At the temperature $T_2$°C, the light signal from the detection region is transmitted to the first blazed grating at an incident angle $\theta_2$. The first blazed grating concentrates the light energy of the light signal from the detection region on the first spectrum whose center wavelength is equal to the wavelength of the laser beam, to obtain a first reflected light signal whose center wavelength is $\lambda_2$. A spectral width is $\Delta\lambda_B$, and an emergent angle of the first reflected light signal on the first blazed grating is $\theta_{out}$.

Due to impact of a temperature drift of the laser, wavelengths of laser beams transmitted to the first blazed grating are different at different temperatures. Consequently, angles of laser beams transmitted to the detection region through the first blazed grating are also different. Based on reversibility of a light path, at different temperatures, incident angles at which the light signal from the detection region is transmitted to the first blazed grating are different. Refer to FIG. 3a and FIG. 3b, the incident angle at the temperature $T_1$°C is $\theta_1$, and the incident angle at the temperature $T_2$°C

is $\theta_2$. It may be understood that, at different temperatures, both the incident angle and the center wavelength of the incident light transmitted to the first blazed grating are different, that is, both the incident angle and the incident wavelength change. According to the foregoing Formula 1, the emergent angle of the first reflected light signal transmitted from the first blazed grating may be the same. In other words, when a temperature changes from $T_1$°C to $T_2$°C, the emergent angle of the first reflected light signal on the first blazed grating may remain unchanged.

The first blazed grating in the structure 1 may split a light signal with a wide spectral width to obtain spectra with narrow spectral widths, and concentrate the light energy of the light signal on the first spectrum whose center wavelength is equal to the wavelength of the laser beam, to obtain a first reflected light signal with a narrow spectral width. This can reduce interference of the ambient light to the laser detection system, and suppress ambient light of approximately 40 dB through simulation, thereby increasing the ranging range of the laser detection system.

In a structure 2, the grating component includes a first blazed grating and a second blazed grating.

Herein, for a structure of the second blazed grating, refer to the foregoing descriptions of the structure of the first blazed grating. Details are not described herein again.

It may be also understood that the grating component in the structure 2 is of a two-stage series-connected structure including two blazed gratings, to enable the detection component in the laser detection system to receive a first reflected light signal with an ultra-narrow spectral width. In a possible implementation, the first blazed grating is configured to: receive the light signal from the detection region, split the light signal to obtain second spectra with the different center wavelengths, concentrate the light energy of the light signal on a second spectrum whose center wavelength is equal to the wavelength of the laser beam, to obtain a second reflected light signal, and transmit the second reflected light signal to the second blazed grating. The second blazed grating is configured to: re-split the received second reflected light signal to obtain the first spectra with the different center wavelengths, concentrate light energy of the second reflected light signal on the first spectrum whose center wavelength is the wavelength of the laser beam, to obtain the first reflected light signal, and transmit the first reflected light signal to a corresponding detector. The spectral width of the first reflected light signal is less than a spectral width of the second reflected light signal. To be specific, the first blazed grating performs primary splitting on the light signal from the detection region, to obtain the second reflected light signal, and the second blazed grating performs secondary splitting on the second reflected light signal from the first blazed grating, to obtain the first reflected light signal.

FIG. 3c is a schematic diagram of a simulated waveform of a second reflected light signal according to this application. It can be learned from FIG. 3a, FIG. 3b, and FIG. 3c that a spectral width $\Delta\lambda_3$ of the second reflected light signal is narrower than the spectral width $\Delta\lambda_1$ of the light signal from the detection region, and is wider than the spectral width $\Delta\lambda_2$ of the first reflected light signal. Therefore, it can be noted that the two-stage series-connected structure of the blazed grating may further reduce the ambient light entering the laser detection system, that is, may further reduce interference of the ambient light to the laser detection system, to help further increase the ranging range of the laser detection system.

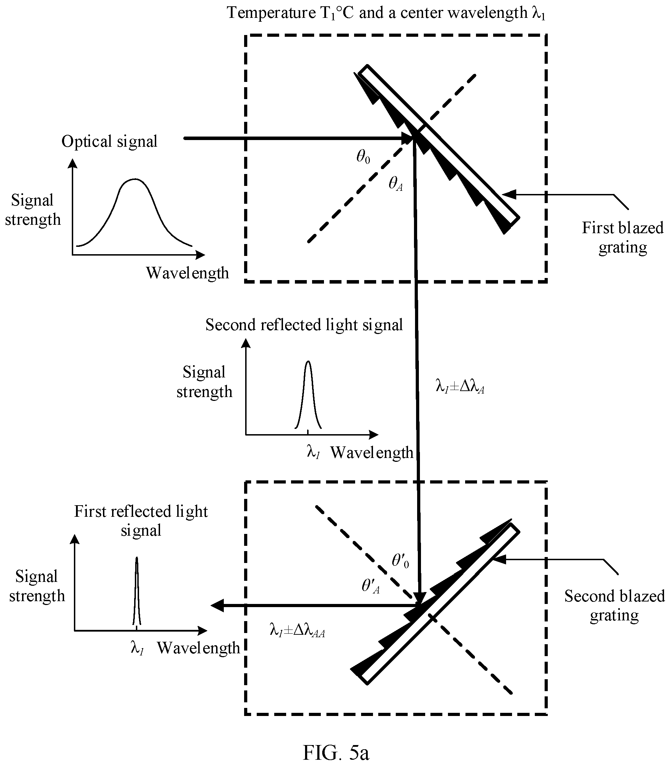

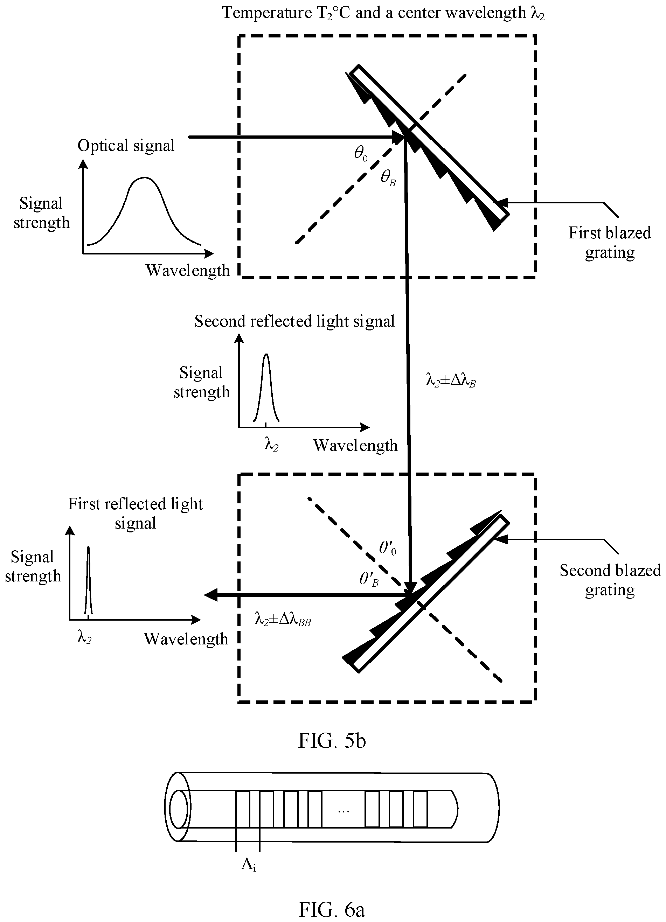

FIG. 5a and FIG. 5b are schematic diagrams of light paths passing through a grating component at two different temperatures ($T_1$°C and $T_2$°C) according to this application. The grating component includes the first blazed grating and the second blazed grating. At the temperature $T_1$°C, the light signal from the detection region is transmitted to the first blazed grating at an incident angle $\theta_0$. The first blazed grating is configured to: receive the light signal from the detection region, split the light signal to obtain second spectra with different center wavelengths, concentrate light energy of the light signal on a second spectrum whose center wavelength is equal to the wavelength of the laser beam, to obtain a second reflected light signal whose center wavelength is $\lambda_1$, and transmit the second reflected light signal to the second blazed grating at an incident angle $\theta_0'$. A spectral width of the second reflected light signal is $\Delta\lambda_A$. The second blazed grating is configured to re-split the received second reflected light signal whose center wavelength is $\lambda_1$, to obtain the first spectra with the different center wavelengths, and concentrate light energy of the second reflected light signal on the first spectrum whose center wavelength is equal to the wavelength of the laser beam, to obtain the first reflected light signal whose center wavelength is $\lambda_1$. A spectral width of the first reflected light signal is $\Delta\lambda_{AA}$, and the spectral width $\Delta\lambda_{AA}$ of the first reflected light signal is less than the spectral width $\Delta\lambda_A$ of the second reflected light signal.

At the temperature $T_2$°C, the light signal from the detection region is transmitted to the first blazed grating at an incident angle $\theta_0$. The first blazed grating is configured to: receive the light signal from the detection region, split the light signal to obtain second spectra with different center wavelengths, concentrate the light energy of the light signal on a second spectrum whose center wavelength is equal to the wavelength of the laser beam, to obtain a second reflected light signal whose center wavelength is $\lambda_2$, and transmit the second reflected light signal to the second blazed grating at an incident angle $\theta_0'$. A spectral width of the second reflected light signal is $\Delta\lambda_B$. The second blazed grating is configured to: re-split the received second reflected light signal whose center wavelength is $\lambda_2$, to obtain the first spectra with the different center wavelengths, and concentrate the light energy of the second reflected light signal on the first spectrum whose center wavelength is equal to the wavelength of the laser beam, to obtain a first reflected light signal whose center wavelength is $\lambda_2$. The spectral width of the first reflected light signal is $\Delta\lambda_{BB}$, and the spectral width $\Delta\lambda_{BB}$ of the first reflected light signal is less than the spectral width $\Delta\lambda_B$ of the second reflected light signal

The second reflected light signal is obtained by using the first blazed grating. The spectral width of the second reflected light signal is less than the spectral width of the light signal, to reduce interference of the ambient light to the laser detection system. Further, the second blazed grating further splits the second reflected light signal, and concentrates the light energy of the second reflected light signal on the first spectrum whose center wavelength is equal to the wavelength of the laser beam, to obtain the first reflected light signal. The spectral width of the first reflected light signal is less than the spectral width of the second reflected light signal, that is, a spectral width of a reflected light signal transmitted to a detector is further reduced. This can further reduce the interference of the ambient light to the laser detection system, thereby improving the ranging range of the laser detection system. It may be determined, through simulation, that the two-stage series-connected structure of the blazed grating can implement suppression of ambient light higher than 80 dB.

In a structure 3, the grating component includes a first blazed grating and a fiber grating array.

It may be also understood that the grating component in the structure 3 is of a two-stage series-connected structure including a blazed grating and a fiber grating, to enable the laser detection system to receive a reflected light signal with an ultra-narrow spectral width. In a possible implementation, the first blazed grating is configured to: receive the light signal from the detection region, split the light signal to obtain second spectra with different center wavelengths, concentrate the light energy of the light signal on a second spectrum whose center wavelength is equal to the wavelength of the laser beam, to obtain a second reflected light signal, and transmit the second reflected light signal to a corresponding fiber grating. Each fiber grating in the fiber grating array is configured to re-split the received corresponding second reflected light signal to obtain the first spectra with the different center wavelengths, concentrate light energy of the second reflected light signal on the first spectrum whose center wavelength is equal to the wavelength of the laser beam, to obtain the first reflected light signal, and transmit the first reflected light signal to a detector corresponding to the fiber grating. The spectral width of the first reflected light signal is less than a spectral width of the second reflected light signal. To be specific, the first blazed grating performs primary splitting on the light signal from the detection region, to obtain the second reflected light signal, and the fiber grating performs secondary splitting on the second reflected light signal from the first blazed grating, to obtain the first reflected light signal.

FIG. 6a is a schematic diagram of a structure of a fiber grating according to this application. An interval of the fiber grating is $\Lambda_i$. The interval $\Lambda_i$ of the fiber grating and a center wavelength $\lambda_i$ of a first reflected light signal satisfies the following Formula 2:

$$\lambda_i = 2n_{eff} * \Lambda_i \qquad \text{Formula 2}$$

$n_{eff}$ is an effective refractive index of the fiber grating, and i is an integer greater than or equal to 1.

In a possible implementation, the fiber grating with the interval of $\Lambda_i$ may be carved on a fiber by using a carbon dioxide ($CO_2$) or femtosecond laser.

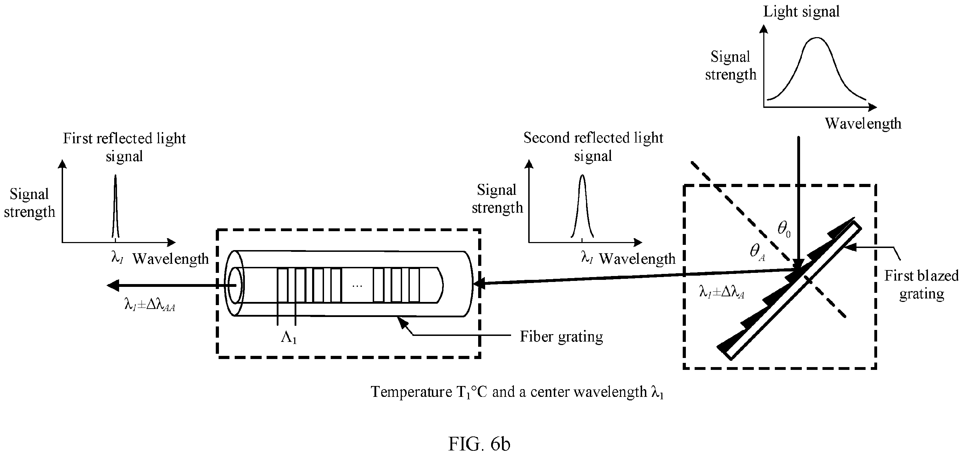

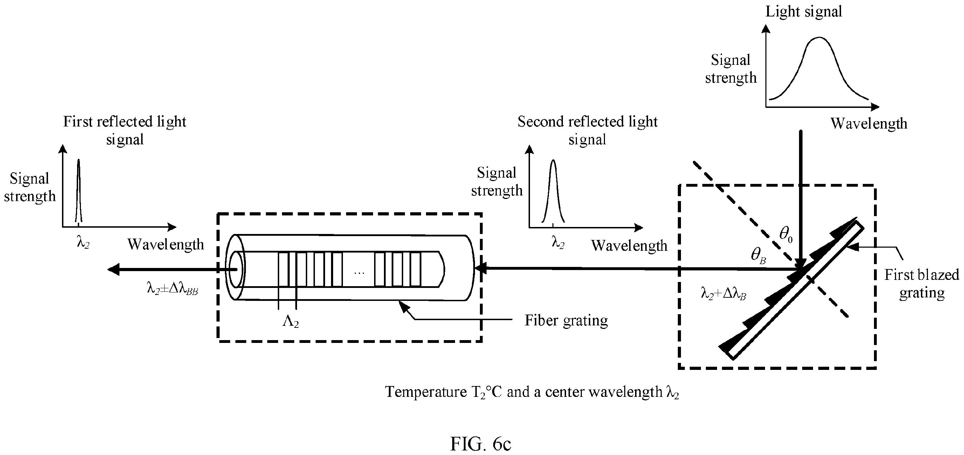

FIG. 6b and FIG. 6c are schematic diagrams of light paths passing through a grating component at two different temperatures ($T_1$°C and $T_2$°C) according to this application. The grating component includes the first blazed grating and the fiber grating. At the temperature $T_1$°C, the light signal from the detection region is transmitted to the first blazed grating at an incident angle $\theta_0$. The first blazed grating is configured to: receive the light signal from the detection region, split the light signal to obtain second spectra with different center wavelengths, concentrate the light energy of the light signal on a second spectrum whose center wavelength is equal to the wavelength of the laser beam, to obtain a second reflected light signal whose center wavelength is $\lambda_1$, and transmit the second reflected light signal to the fiber grating at an incident angle $\theta_A$. A spectral width of the second reflected light signal is $\Delta\lambda_A$. The fiber grating is configured to re-split the received second reflected light signal whose center wavelength is $\lambda_1$, to obtain the first spectra with the different center wavelengths, and concentrate light energy of the second reflected light signal on the first spectrum whose center wavelength is equal to the wavelength of the laser beam, to obtain the first reflected light signal whose center wavelength is $\lambda_1$. The spectral width of the first reflected light signal is $\Delta\lambda_{AA}$, and the spectral width $\Delta\lambda_{AA}$ of the first reflected light signal is less than the spectral width $\Delta\lambda_A$ of the second reflected light signal.

At the temperature $T_2$°C, the light signal from the detection region is transmitted to the first blazed grating at an incident angle $\theta_0$. The first blazed grating is configured to: receive the light signal from the detection region, split the light signal to obtain second spectra with different center wavelengths, concentrate the light energy of the light signal on a second spectrum whose center wavelength is equal to the wavelength of the laser beam to obtain a second reflected light signal whose center wavelength is $\lambda_2$, and transmit the second reflected light signal to the fiber grating at an incident angle $\theta_b$. A spectral width of the second reflected light signal is $\Delta\lambda_B$. The fiber grating is configured to: re-split the received second reflected light signal whose center wavelength is $\lambda_2$ to obtain first spectra with the different center wavelengths, and concentrate light energy of the second reflected light signal on the first spectrum whose center wavelength is equal to the wavelength of the laser beam, to obtain a first reflected light signal whose center wavelength is $\lambda_2$. A spectral width of the first reflected light signal is $\Delta\lambda_{BB}$, and the spectral width $\Delta\lambda_{BB}$, of the first reflected light signal is less than

the spectral width $\Delta\lambda_B$ of the second reflected light signal.

The two-stage series-connected grating component including the first blazed grating and the fiber grating is used to obtain the second reflected light signal by using the first blazed grating. The spectral width of the second reflected light signal is less than the spectral width of the light signal, to reduce interference of the ambient light to the laser detection system. Further, the first reflected light signal is obtained by using the fiber grating, and the spectral width of the first reflected light signal is less than the spectral width of the second reflected light signal. In other words, the spectral width of the first reflected light signal transmitted to the detector is further reduced, to reduce impact of the ambient light on the laser detection system, so as to further increase the ranging range of the laser detection system. It may be determined, through simulation, that the first blazed grating and the fiber grating are in a two-stage series connection, to implement suppression of ambient light higher than 80 dB.

It should be noted that, at the temperature $T_1°C$, a center wavelength of the laser beam emitted by the laser is $\lambda_1$, and both the center wavelengths of the first reflected light signal and the second reflected light signal are $\lambda_1$. At the temperature $T_2°C$, a center wavelength of the laser beam emitted by the laser is $\lambda_2$, and both the center wavelengths of the first reflected light signal and the second reflected light signal are $\lambda_2$.

### 3. Detection component

In this application, the detection component is configured to convert the first reflected light signal received from the grating component into the first reflected electrical signal for storage. In a possible implementation, the detection component may include a detector or a detector array. The detector may be, for example, a photodetector (photon detector, PD), a single-photon avalanche diode (single-photon avalanche diode, SPAD), a positive intrinsic negative (positive intrinsic negative, PIN)-type photodiode (also referred to as a PIN junction diode), or an avalanche photodiode (avalanche photodiode, APD). The detector array may be an SPAD array, a PIN-type photodiode array, or an APD array.

In a possible implementation, the detector or each detector in the detector array may be configured to convert the received first reflected light signal into the first reflected electrical signal, and store the first reflected electrical signal. Further, optionally, the detection component may further include a processing circuit. The processing circuit may obtain the stored first reflected electrical signal, and determine the associated information of the target in the detection region based on the first reflected electrical signal, for example, a distance, an orientation, a height, a speed, a posture, and a shape of the target, and physical characteristics (for example, reflectivity and roughness) of a reflective surface. The processing circuit may be a processor, a field programmable gate array (field programmable gate array, FPGA), a digital data processing (digital signal processing, DSP) circuit, an application-specific integrated circuit (application specific integrated circuit, ASIC), or another programmable logic device.

In this application, the laser detection system may further include a light splitting component. Further, optionally, the laser detection system may further include an optical focusing component, a scanning component, a light beam emitting component, and a light beam receiving component. Detailed descriptions are separately provided below.

### 4. Light splitting component

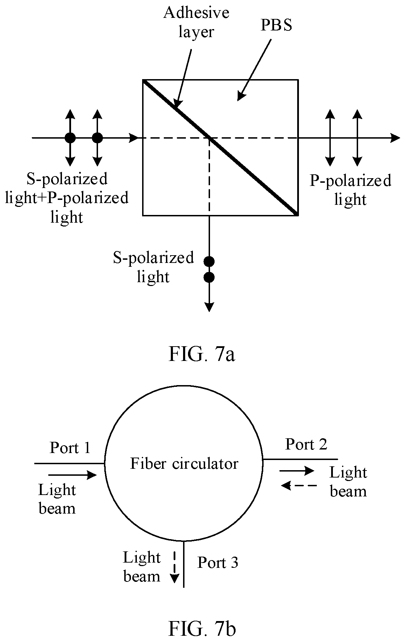

In this application, the light splitting component may be a polarization beam splitter, or may be a semitransparent semi-reflective mirror, or may be a perforated reflector, or may be a fiber circulator. The polarization beam splitter may be formed by attaching slopes of two polarizing beam splitters (polarizing beam splitters, PBSs) by using an adhesive layer (as shown in FIG. 7a). The PBS is an optical element that is implemented as follows: A multi-layer film structure is plated on a slope of a right-angle prism, and then a cube structure is formed by using an adhesive layer. A property that transmittance of P-polarized light is 1 and transmittance of S-polarized light is less than 1 during incidence of a light beam at the Brewster's angle is used, and after the light beam passes through the multi-layer film structure for a plurality of times at the Brewster's angle, a P-polarized component is completely transmitted, and most (at least 90%) of an S-polarized component is reflected. The polarization beam splitter splits the incident light beam (which includes the P-polarized light and S-polarized light) into horizontal polarized light and vertical polarized light, namely, the P-polarized light and the S-polarized light. The P-polarized light completely passes through the polarization beam splitter, the S-polarized light is reflected at an angle of 45 degrees, and an emergent direction of the S-polarized light and an emergent direction of the P-polarized light form an angle of 90 degrees. The perforated reflector is a reflective surface with a hole. The hole of the perforated reflector may enable a laser beam from a laser to pass through the perforated reflector, and the reflective surface of the perforated reflector may reflect a received light beam. The fiber circulator is a multi-port non-reciprocal optical component, and a light beam can travel only in one direction. As shown in FIG. 7b, if the light beam is input from a port 1, the light beam is output from a port 2. If the light beam is input from a port 2, the light beam is output from a port 3, and an output loss of the light beam is very small. When the light beam is input from the port 2, a loss is large when the light beam is output from the port 1. Similarly, when light beam is input from the port 3, a loss is large when the light beam is output from the port 1 or the port 2.

5. Optical focusing component

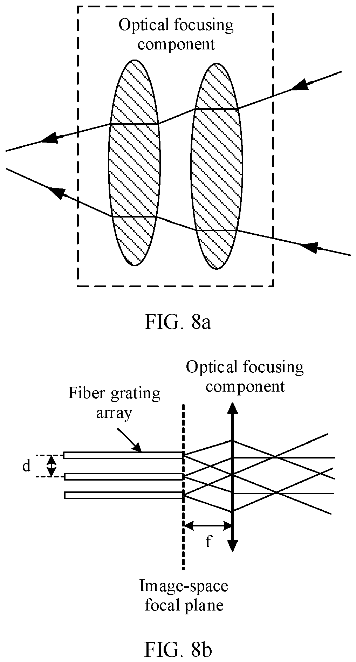

In this application, the optical focusing component is configured to focus a received reflected light signal (for example, the second reflected light signal or the first reflected light signal) on an image-space focal plane. In a possible implementation, the optical focusing component may be a single lens or a lens combination. FIG. 8a is a schematic diagram of a structure of an optical focusing component according to this application. The optical focusing component may include two convex lenses, and the two convex lenses may converge the received first reflected light signal to a corresponding detector. Specifically, shapes and optical parameters of the two convex lenses may be determined based on locations of structures in the laser detection system. This is not limited in this application.

With reference to the foregoing structure 1, because light spots of the first reflected light signals transmitted from the optical focusing component coincide on an image-space focal plane of the optical focusing component, the detector in the laser detection system may be located on the image-space focal plane of the optical focusing component.

With reference to the foregoing structure 2, because light spots of second reflected light signals transmitted from the optical focusing component coincide on an image-space focal plane of the optical focusing component, the second blazed grating may be located on the image-space focal plane of the optical focusing component.

With reference to the foregoing structure 3, because light spots of the second reflected light signals transmitted from the optical focusing component coincide on an image-space focal plane of the optical focusing component, an ingress port of each fiber grating in the fiber grating array may be located on the image-space focal plane of the optical focusing component. For this case, refer to FIG. 8b. The fiber grating array is an array including a plurality of fiber gratings, and an interval d between the fiber gratings may be equal or unequal. This is not limited in this application.

6. Scanning component

In a possible implementation, the scanning component is configured to: receive the laser beam from the laser, separately emit the laser beam to the detection region at different detection angles, and transmit the light signal from the detection region to the grating component.

In this application, the scanning component may be a scanner, for example, a reflective scanner. The reflective scanner changes a scanning direction of the scanner through mechanical rotation. The reflective scanner includes but is not limited to a mechanical rotating mirror and a MEMS micro-oscillating mirror. Optionally, the scanner may be in a mode of continuous operation, or may be in a mode of step operation.

The detection region is scanned by changing a detection angle of the scanning component. For example, a plurality of detection angles may be preset, and the scanning component may emit the laser beam to the detection region at each of the plurality of detection angles, to obtain the associated information of the target in the detection region.

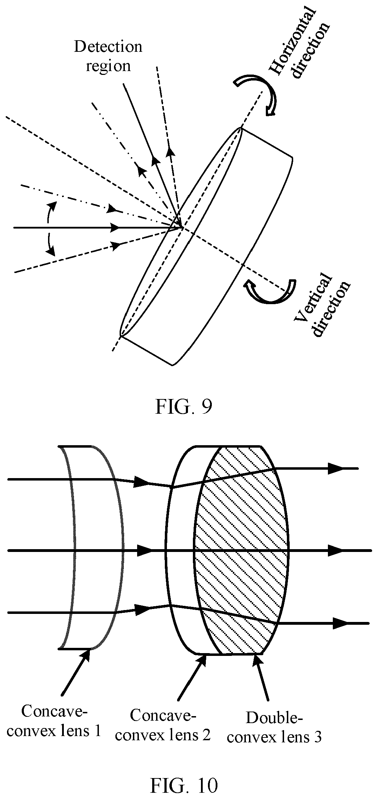

FIG. 9 is a schematic diagram of a structure of a scanning component according to this application. The scanning component may change a detection angle in a two-dimensional (second dimension, 2D) direction (for example, a horizontal direction and a vertical direction). Changing the detection angle may be also understood as that the scanning component may first rotate in the horizontal direction and then rotate in the vertical direction, or first rotate in the vertical direction and then rotate in the horizontal direction, or rotate in both the vertical direction and the horizontal direction, or rotate alternately in the horizontal direction and the vertical direction, so that the scanning component is at different detection angles. At one detection angle, the laser beam is projected to a location in the detection region by using the scanning component. In FIG. 9, for example, the scanning component are at three different detection angles. The laser beam is projected to three locations in the detection region by using the scanning component.

In another possible implementation, the scanning component may be alternatively an optical phased array (optical phased array, OPA). A working principle of the OPA is as follows: A phase relationship between light waves radiated from phase control units (, for example, optical phase shifters) is adjusted, so that the light waves are in a same phase in a specified direction, and generate mutually-reinforced interference. As a result, a high-intensity light beam is generated in the direction due to the interference. However, light waves that are radiated from the phase control units in another direction are not in a same phase. As a result, the interference is mutually canceled. Therefore, radiation intensity is close to 0. The phase control units forming the phased array may scan a pointing direction of one or more laser beams based on a designed program.

7. Light beam emitting component

To cover the detection region with the laser beam as much as possible, so as to enable the laser beam to irradiate the target in the detection region as much as possible, the laser detection system may further include the light beam emitting component. The light beam emitting component is configured to: receive the laser beam from the laser, expand and collimate the received laser beam, and emit an expanded and collimated laser beam to the detection region. It may be also understood that, in a possible implementation, the light beam emitting component may expand and collimate the received laser beam to obtain a surface light beam, and irradiate the target in the detection region with the laser beam in a form of the surface light beam. The surface light beam means that a cross section of the laser beam is an ellipse, a circle, or a rectangle, or in another possible shape. Because the laser beam in the form of the surface light beam irradiates a large range of the detection region, and may even cover the entire detection region, an element used by the laser detection system to drive the scanner to rotate or vibrate may be omitted, to miniaturize a size of the laser detection system.

In this application, the light beam emitting component may be a single lens, or may be a lens combination. The lens may be a simple spherical lens or an aspheric lens, for example, a concave lens or a convex lens. The single lens may be a convex lens. The lens combination may be a combination of a convex lens and a concave lens, a combination of concave lenses, or a combination of convex lenses. The convex lens and the concave lens are in a plurality of different shapes. For example, the convex lens includes a double-convex lens, a plane-convex lens, and a concave-convex lens, and the concave lens includes a double-concave lens, a plane-concave lens, and a concave-convex lens. Specific shapes of the convex lens and the concave lens are not limited herein. Any single lens or combination of lens that can transmit the laser beam from the laser to the detection region as much as possible is applicable to this application. Further, optionally, a divergence angle of the laser beam from the laser may be large, and there may be a light beam with poor astigmatism quality. Therefore, the light beam emitting component may further collimate and shape the laser beam, so that the divergence angle of the laser beam transmitted to the detection region is small, and a large amount of signal light can be irradiated to the detection region.

FIG. 10 is a schematic diagram of a structure of a light beam emitting component according to this application. The light beam emitting component is a lens combination, and includes three lenses: a concave-convex lens 1, a concave-convex lens 2, and a double-convex lens 3. A surface that is of the concave-convex lens 1 and that faces the laser is a concave surface, and a surface that is of the concave-convex lens 1 and that faces the concave-convex lens 2 is a convex surface. A surface that is of the concave-convex lens 2 and that faces the concave-convex lens 1 is a convex surface, and a surface that is of the concave-convex lens 2 and that faces the double-convex lens 3 is a concave surface.

8. Light beam receiving component

In a possible implementation, the light beam receiving component may be a Cassegrain optical system, a simple spherical lens (for example, a spherical lens combination, an aspheric lens, or an aspheric lens combination), or the like. The Cassegrain system is also referred to as a Cassegrain telescope optical system or an inverted telescope optical system, and is a reflective telescope system in which one of focal points of a secondary reflector coincides with a focal point of a primary reflector. Generally, a laser detection system used for ranging usually uses a simple spherical or aspheric lens, or a lens combination as a light beam receiving component. For example, the single lens may be a concave-convex lens. The lens combination may be a combination of a convex lens and a concave lens, a combination of concave lenses, or a combination of convex lenses. The convex lens and the concave lens are in a plurality of different shapes. For example, the convex lens includes a double-convex lens, a plane-convex lens, and a concave-convex lens, and the concave lens includes a double-concave lens, a plane-concave lens, and a concave-convex lens. Specific shapes of the convex lens and the concave lens are not limited herein. Any single lens or combination of lens that can transmit the light signal from the detection region to the grating component as much as possible is applicable to this application. Further, optionally, the light beam receiving component may be further configured to collect, as much as possible, a reflected light signal reflected by the target, to increase the ranging range of the laser detection system. Therefore, when a light transmission aperture that is of the light beam receiving component and that faces the detection region is large, the light beam receiving component can receive more reflected light signals.

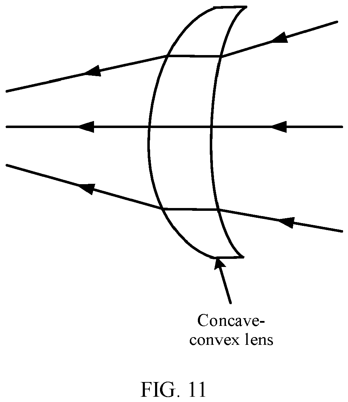

FIG. 11 is a schematic diagram of a structure of a light beam receiving component according to this application. The light beam receiving component may include a concave-convex lens. A concave surface of the concave-convex lens faces the detection region, to receive a reflected light signal from the detection region as much as possible.

Based on the foregoing content, the following provides three specific implementations of the laser detection system with reference to a specific hardware structure, to further understand the structure of the foregoing laser detection system.

Example 1

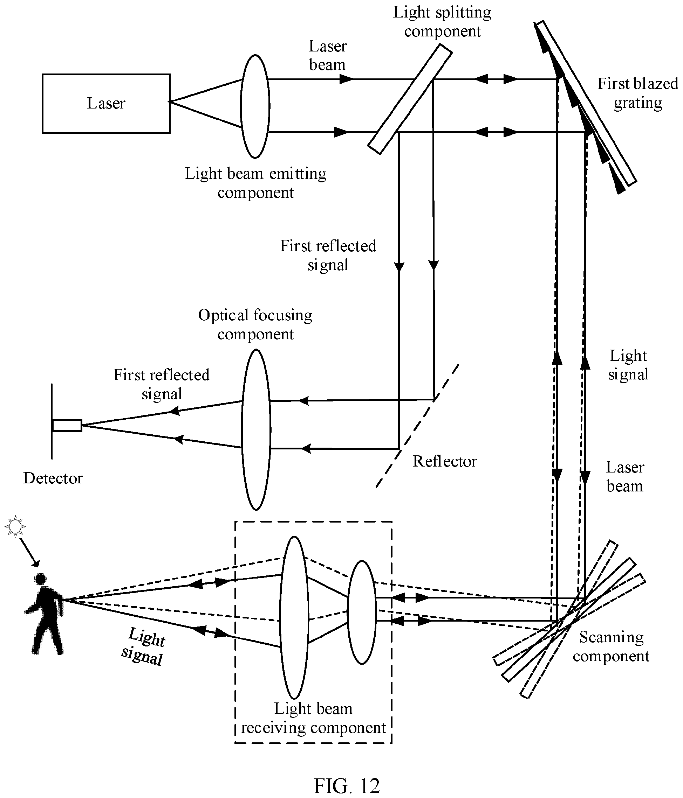

FIG. 12 is a schematic diagram of a structure of another laser detection system according to this application. The laser detection system may include a laser, a grating component, and a detection component. The grating component includes a first blazed grating, and the detection component includes a detector. Further, optionally, the laser detection system may further include a light splitting component, an optical focusing component, a scanning component, a light beam emitting component, and a light beam receiving component. In a possible implementation, the detector is located on an image-space focal plane of the optical focusing component.

The laser is configured to emit a laser beam, and transmit the laser beam to the light beam emitting component. The light beam emitting component is configured to expand and collimate the received laser beam, and transmit an expanded and collimated laser beam to the first blazed grating by using the light splitting component. The first blazed grating is configured to transmit the laser beam to the scanning component. The scanning component is configured to transmit the laser beam to a detection region at different detection angles by using the light beam receiving component. It should be understood that, at different temperatures, due to impact of a temperature drift, wavelengths of laser beams transmitted to the first blazed grating may be different. Therefore, emergent angles of laser beams transmitted from the first blazed grating may be also different. In FIG. 12, solid lines and dashed lines are respectively used to represent light paths of laser beams transmitted from the first blazed grating at different temperatures. For example, the solid lines represent light paths at a temperature $T_1$°C, and the dashed lines represent light paths at a temperature $T_2$°C. It should be understood that the first blazed grating may also concentrate light energy in the received laser beam on a spectrum of a specific order, and transmit the spectrum of the order to the scanning component. In addition, the scanning component changes only a light path of a light beam.

A light signal from the detection region is transmitted to the light beam receiving component. The light beam receiving component is configured to: receive the light signal from the detection region, collect and shape the light signal, and transmit a collected and shaped light signal to the first blazed grating by using the scanning component. The first blazed grating is further configured to concentrate light energy of the light signal on a first spectrum whose center wavelength is equal to a wavelength of the laser beam, to obtain a first reflected light signal, and transmit the first reflected light signal to the light splitting component. The light splitting component is further configured to transmit the first reflected light signal to the optical focusing component. The optical focusing component is configured to focus the first reflected light signal from the light splitting component on the image-space focal plane, and transmit a focused first reflected light signal to the detector.

In a possible implementation, the laser detection system may further include a reflector. The reflector is configured to receive the first reflected light signal from the light splitting component, and reflect the received first reflected light signal to the optical focusing component. This helps shorten the light path, thereby help miniaturize the laser detection system.

It should be noted that, at different temperatures, the emergent angles of the laser beams transmitted from the first blazed grating are different. Based on reversibility of the light path, incident angles of light signals transmitted to the first blazed grating are also different at different temperatures (where the solid line and the dashed line represent two different temperatures), and an emergent angle of the first reflected light signal transmitted from the first blazed grating is the same.

Based on the laser detection system shown in FIG. 12, the first blazed grating is used to split the light signal to obtain the first reflected light signal whose spectral width is far less than a spectral width of the light signal from the detection region, and the detector determines a target in the detection region based on the first reflected light signal whose spectral width is narrow. This can reduce interference of ambient light to the detector in the laser detection system, thereby increasing a detection distance of the laser detection system.

Example 2

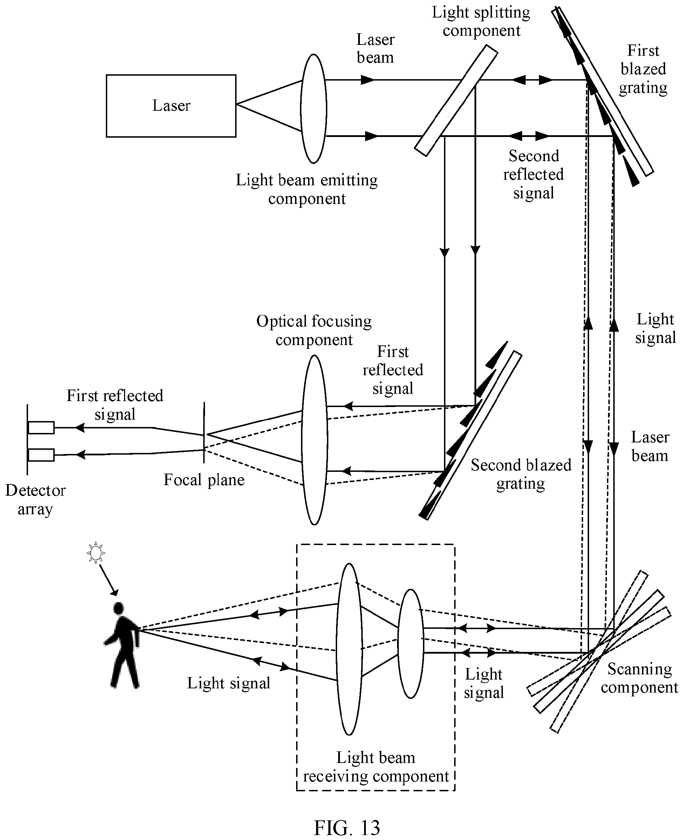

FIG. 13 is a schematic diagram of an example of a structure of still another laser detection system according to this application. The laser detection system may include a laser, a grating component, and a detection component. The grating component includes a first blazed grating and a second blazed grating. The detection component includes a detector array (where in FIG. 13, an example in which the detector array includes two detectors is used). Further, optionally, the laser detection system may further include a light splitting component, an optical focusing component, a scanning component, a light beam emitting component, and a light beam receiving component. In a possible implementation, each detector in the detector array may be located on an image-space focal plane of the optical focusing component.

The laser is configured to emit a laser beam, and transmit the laser beam to the light beam emitting component. The light beam emitting component is configured to expand and collimate the received laser beam, and transmit an expanded and collimated laser beam to the light splitting component. The light splitting component is configured to transmit the received laser beam to the first blazed grating. The first blazed grating is configured to transmit the laser beam to the scanning component. The scanning component is configured to transmit the laser beam to a detection region at different detection angles by using the light beam receiving component. It should be understood that, at different temperatures, due to impact of a temperature on a wavelength of the laser beam emitted by the laser, wavelengths of laser beams transmitted to the first blazed grating may be different. Therefore, emergent angles of laser beams transmitted from the first blazed grating may be also different. In FIG. 13, solid lines and dashed lines are respectively used to represent light paths from the first blazed grating at different temperatures. For example, the solid lines represent light paths at a temperature $T_1$°C, and the dashed lines represent light paths at a temperature $T_2$°C. The first blazed grating may also concentrate light energy in the received laser beam on a spectrum of a specific order, and transmit the spectrum of the order to the scanning component.

A light signal from the detection region is transmitted to the light beam receiving component. The light beam receiving component is configured to: receive the light signal from the detection region, collect and shape the light signal, and transmit a collected and shaped light signal to the first blazed grating by using the scanning component. The first blazed grating is further configured to concentrate light energy of the light signal on a first spectrum whose center wavelength is equal to a wavelength of the laser beam, to obtain a second reflected light signal, and transmit the second reflected light signal to the light splitting component. The light splitting component is further configured to transmit the received second reflected light signal to the second blazed grating. The second blazed grating is configured to: further split the received second reflected light signal, that is, concentrate light energy of the second reflected light signal on the first spectrum whose center wavelength is equal to the wavelength of the laser beam, to obtain a first reflected light signal, and transmit the first reflected light signal to the optical focusing component. The optical focusing component is configured to focus the first reflected light signal from the second blazed grating on an image-space focal plane, and transmit a focused first reflected light signal to a corresponding detector. A spectral width of the first reflected light signal is less than a spectral width of the second reflected light signal. It should be understood that, at different temperatures, incident angles of the second reflected light signals transmitted to the second blazed grating are the same, and emergent angles of the first reflected light signals transmitted from the second blazed grating are different.

It should be noted that one center wavelength range of the first reflected light signal corresponds to one detector in the detector array. For example, when being $\lambda_1$ to $\lambda_5$, the center wavelength range corresponds to a detector 1, and when being $\lambda_6$ to $\lambda_9$, the center wavelength range corresponds to a detector 2. Each detector corresponds to a field of view within a range, and a temperature drift causes the center wavelength of the first reflected light signal to change. Therefore, an angle at which the first reflected light signal is transmitted to the detector may also drift. However, if the angle does not drift out of the range of the field of view of the detector, the first reflected light signal with a changed center wavelength still corresponds to the detector.

Based on the laser detection system shown in FIG. 13, the two-stage series-connected grating component including the first blazed grating and the second blazed grating is used to obtain the first reflected light signal by performing two-stage light splitting by the first blazed grating and the second blazed grating. The spectral width of the first reflected light signal is less than the spectral width of the second reflected light signal, to reduce impact of ambient light on the laser detection system, so as to further increase a ranging range of the laser detection system.

Example 3

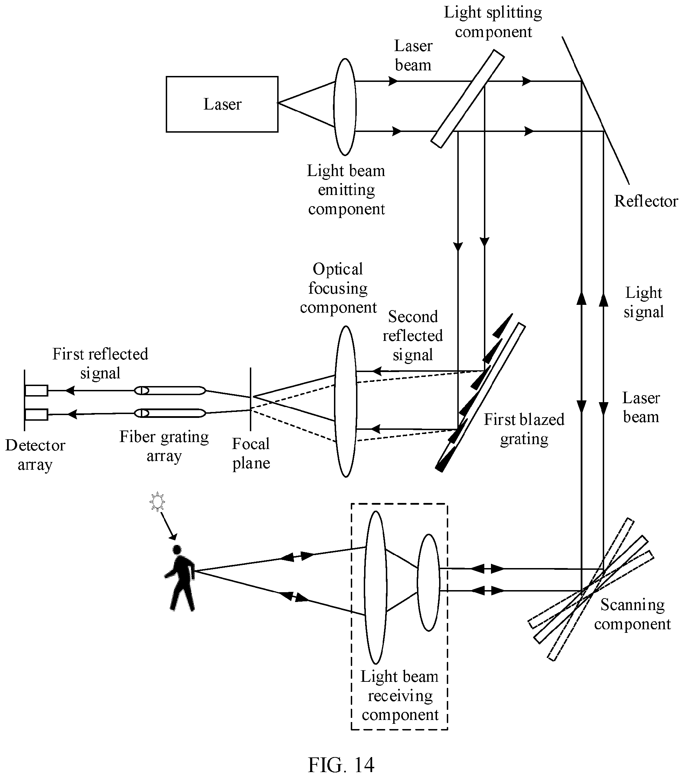

FIG. 14 is a schematic diagram of an example of a structure of still another laser detection system according to this application. The laser detection system may include a laser, a grating component, and a detection component. The grating component includes a first blazed grating and a fiber grating array. The detection component includes a detector array (where in FIG. 14, an example in which the detector array includes two detectors is used). Detectors in the detector array are in a one-to-one correspondence with fiber gratings in the fiber grating array, that is, one detector corresponds to one fiber grating. Further, optionally, the laser detection system may further include a light splitting component, a reflector, an optical focusing component, a scanning component, a light beam emitting component, and a light beam receiving component. In a possible implementation, an ingress port of each fiber grating in the fiber grating array is located on an image-space focal plane of the optical focusing component. For this case, refer to FIG. 8b.

The laser is configured to emit a laser beam, and transmit the laser beam to the light beam emitting component. The light beam emitting component is configured to expand and collimate the received laser beam, and transmit an expanded and collimated laser beam to the light splitting component. The light splitting component is configured to transmit the received laser beam to the reflector. The reflector is configured to reflect the laser beam to the scanning component. The scanning component is configured to transmit the laser beam to a detection region at different detection angles by using the light beam receiving component.

A light signal from the detection region is returned along an original light path, and is transmitted to the first blazed grating by using the light splitting component. The first blazed grating is configured to concentrate light energy of the light signal on a first spectrum whose center wavelength is equal to a wavelength of the laser beam, to obtain a second reflected light signal, and transmit the second reflected light signal to the optical focusing component. The optical focusing component is configured to focus the second reflected light signal from the first blazed grating on the image-space focal plane, and couple a focused second reflected light signal into a corresponding fiber grating. The fiber grating is configured to concentrate light energy of the received corresponding second reflected light signal on the first spectrum whose center wavelength is equal to the wavelength of the laser beam, to obtain a first reflected light signal, and transmit the first reflected light signal to a detector corresponding to the fiber grating. A spectral width of the first reflected light signal is less than a spectral width of the second reflected light signal.

In a possible implementation, a fiber array may be further included between the fiber grating array and the optical focusing component. Fibers in the fiber array are in a one-to-one correspondence with the fiber gratings in the fiber grating array. To be specific, the second reflected light signal focused by the optical focusing component may be first coupled into a corresponding fiber, and then coupled to a corresponding fiber grating after being transmitted through the fiber.

Based on the laser detection system shown in FIG. 14, the two-stage series-connected grating component including the first blazed grating and the fiber grating is used to obtain the first reflected light signal by performing two-stage light splitting by the first blazed grating and the fiber grating. The spectral width of the first reflected light signal is less than the spectral width of the second reflected light signal, to reduce impact of ambient light on the laser detection system, so as to further increase a ranging range of the laser detection system.

It should be noted that there may be one or more first blazed gratings, second blazed gratings, and fiber gratings. For ease of description of solutions, an example, there is one first blazed grating, one second blazed gratings, one fiber grating is used. This is not limited in this application. In addition, for functional components in the foregoing laser detection system, refer to the foregoing descriptions. Details are not described herein again.

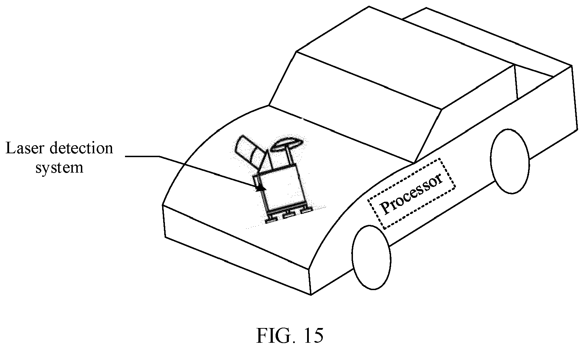

Based on the described structures and function principles of the laser detection system, this application may further provide a vehicle. As shown in FIG. 15, the vehicle may include the foregoing laser detection system and a processor. The processor may be configured to plan a traveling path of the vehicle based on a first reflected electrical signal from the laser detection system, for example, avoid an obstacle in the traveling path. Certainly, the vehicle may further include another component, for example, a memory, a wireless communication apparatus, or a sensor.

In a possible implementation, the processor may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

It may be understood that various numbers in this application are merely used for differentiation for ease of description, and are not used to limit the scope of embodiments of this application. The sequence numbers of the foregoing processes do not mean an execution sequence, and the execution sequence of the processes should be determined based on functions and internal logic of the processes. The terms "first", "second", and the like are used to distinguish between similar objects, and do not need to be used to describe a specific order or sequence. In addition, the terms "include", "have", and any variant thereof are intended to cover non-exclusive inclusion, for example, include a series of steps or units. Methods, systems, products, or devices are not necessarily limited to those steps or units that are literally listed, but may include other steps or units that are not literally listed or that are inherent to such processes, methods, products, or devices.

Although this application is described with reference to specific features and embodiments thereof, it is clear that various modifications and combinations may be made to them without departing from the spirit and scope of this application. Correspondingly, the specification and accompanying drawings are merely example description of the solution defined by the appended claims, and are intended to cover any of or all modifications, variations, combinations or equivalents within the scope of this application.

It is clear that a person skilled in the art can make various modifications and variations to this application without departing from the spirit and the scope of the present invention. In this case, this application is intended to cover these modifications and variations of embodiments of this application provided that they fall within the scope of the claims of this application and their equivalent technologies.

**Claims**

1. A laser detection system, comprising:

    a laser, configured to emit a laser beam to a detection region;
    a grating component, configured to: receive a light signal from the detection region, split the light signal to obtain first spectra with different center wavelengths, concentrate light energy of the light signal on a first spectrum whose center wavelength is equal to a wavelength of the laser beam, to obtain a first reflected light signal, and transmit the first reflected light signal to a detection component, wherein the first reflected light signal is a signal obtained after the laser beam is reflected by a target in the detection region, and a spectral width of the first reflected light signal is less than a spectral width of the light signal; and
    the detection component, configured to convert the received first reflected light signal into a first reflected electrical signal for storage.

**2.** The laser detection system according to claim 1, wherein the grating component is a first blazed grating, and the detection component is a detector.

**3.** The laser detection system according to claim 2, wherein the laser detection system further comprises a light splitting component; and
the light splitting component is configured to transmit the laser beam from the laser to the first blazed grating, and reflect the first reflected light signal from the first blazed grating to the detector.

**4.** The laser detection system according to claim 3, wherein the optical detection system further comprises an optical focusing component, and the detector is located on an image-space focal plane of the optical focusing component; and
the optical focusing component is configured to focus the first reflected light signal from the first blazed grating on the image-space focal plane, and transmit a focused first reflected light signal to the detector.

**5.** The laser detection system according to claim 1, wherein the grating component comprises a first blazed grating and a second blazed grating, the detection component comprises a detector array, and one center wavelength range of the first reflected light signal corresponds to one detector in the detector array; and
that the grating component is configured to: receive a light signal from the detection region, split the light signal to obtain first spectra with different center wavelengths, concentrate light energy of the light signal on a first spectrum whose center wavelength is equal to a wavelength of the laser beam, to obtain a first reflected light signal, and transmit the first reflected light signal to a detection component comprises:

the first blazed grating is configured to: receive the light signal from the detection region, split the light signal to obtain second spectra with different center wavelengths, concentrate the light energy of the light signal on a second spectrum whose center wavelength is equal to the wavelength of the laser beam, to obtain a second reflected light signal, and transmit the second reflected light signal to the second blazed grating; and
the second blazed grating is configured to: re-split the received second reflected light signal to obtain the first spectra with the different center wavelengths, concentrate light energy of the second reflected light signal on the first spectrum whose center wavelength is the wavelength of the laser beam, to obtain the first reflected light signal, and transmit the first reflected light signal to a corresponding detector, wherein the spectral width of the first reflected light signal is less than a spectral width of the second reflected light signal.

**6.** The laser detection system according to claim 5, wherein the laser detection system further comprises an optical focusing component, and the detector array is located on an image-space focal plane of the optical focusing component; and
the optical focusing component is configured to focus the first reflected light signal from the second blazed grating on an image-space focal plane, and transmit a focused first reflected light signal to the corresponding detector.

**7.** The laser detection system according to claim 5 or 6, wherein the laser detection system further comprises a light splitting component; and
the light splitting component is configured to transmit the laser beam from the laser to the first blazed grating, and reflect the second reflected light signal from the first blazed grating to the second blazed grating.

**8.** The laser detection system according to claim 1, wherein the grating component comprises a first blazed grating and a fiber grating array, the detection component comprises a detector array, detectors in the detector array are in a one-to-one correspondence with fiber gratings in the fiber grating array, and one center wavelength range of a second reflected light signal corresponds to one fiber grating in the fiber grating array; and
that the grating component is configured to: receive a light signal from the detection region, split the light signal to obtain first spectra with different center wavelengths, concentrate light energy of the light signal on a first spectrum whose center wavelength is equal to a wavelength of the laser beam, to obtain a first reflected light signal, and transmit the first reflected light signal to a detection component comprises:

the first blazed grating is configured to: receive the light signal from the detection region, split the light signal to obtain second spectra with different center wavelengths, concentrate the light energy of the light signal on a second spectrum whose center wavelength is equal to the wavelength of the laser beam, to obtain a second reflected light signal, and transmit the second reflected light signal to a corresponding fiber grating; and
each fiber grating in the fiber grating array is configured to re-split the received corresponding second reflected light signal to obtain the first spectra with the different center wavelengths, concentrate light energy of the second reflected light signal on the first spectrum whose center wavelength is equal to the wavelength of the laser beam, to obtain the first reflected light signal, and transmit the first reflected light signal to a detector corresponding to the fiber grating, and the spectral width of the first reflected light signal is less than a spectral width of the second reflected light signal.

9. The laser detection system according to claim 8, wherein the laser detection system further comprises an optical focusing component, and an ingress port of each fiber grating in the fiber grating array is located on an image-space focal plane of the optical focusing component; and
the optical focusing component is configured to focus the second reflected light signal from the first blazed grating on the image-space focal plane, and couple a focused second reflected light signal into the corresponding fiber grating.

10. The laser detection system according to claim 8 or 9, wherein the laser detection system further comprises a light splitting component and a reflector;

the light splitting component is configured to transmit the laser beam from the laser to the reflector;
the reflector is configured to reflect the laser beam from the light splitting component to the detection region, and reflect the light signal from the detection region to the light splitting component; and
the light splitting component is further configured to reflect the light signal from the reflector to the first blazed grating.

11. The laser detection system according to any one of claims 2 to 10, wherein an interval $p$ of the first blazed grating meets:

$$\theta_{out} = sin^{-1}\left(sin\,\theta_{in} + \frac{\lambda_i}{p}\right),$$

wherein
$\lambda_i$ is a center wavelength of the light signal transmitted to the first blazed grating, $\theta_{in}$ is an incident angle between the light signal and a normal of a grating plane of the first blazed grating, and $\theta_{out}$ is an emergent angle between emergent light transmitted from the first blazed grating and the normal of the first blazed grating.

12. The laser detection system according to any one of claims 1 to 11, wherein the laser detection system further comprises a scanning component;
the scanning component is configured to: receive the laser beam from the laser, separately emit the laser beam to the detection region at different detection angles, and transmit the light signal from the detection region to the grating component.

13. A vehicle, comprising the laser detection system according to any one of claims 1 to 12, and a processor, wherein the processor is configured to plan a traveling path of the vehicle based on a first reflected electrical signal from the laser detection system.

FIG. 1

FIG. 2

FIG. 3a

Signal
strength

$\Delta\lambda_2$

Wavelength

FIG. 3b

Signal
strength

$\Delta\lambda_3$

Wavelength

FIG. 3c

Normal of a grating plane

$\lambda_i$

$\theta_{in}$

$\alpha$

Normal of a
grooved plane

$\theta_{out}$

$p$

FIG. 4a

Temperature $T_1$°C and a
center wavelength $\lambda_1$

Optical signal

Signal
strength

Wavelength

$\theta_1$

$\theta_{out}$

First blazed
grating

$\lambda_1 \pm \Delta\lambda_A$

First reflected light
signal

Signal
strength

$\lambda_1$

Wavelength

FIG. 4b

Temperature $T_2$°C and
a center wavelength $\lambda_2$

Optical signal

Signal
strength

Wavelength

$\theta_2$

$\theta_{out}$

First blazed
grating

$\lambda_2 \pm \Delta\lambda_B$

First reflected light
signal

Signal
strength

$\lambda_2$

FIG. 4c

Temperature $T_1$°C and a center wavelength $\lambda_1$

FIG. 5a

Temperature $T_2°C$ and a center wavelength $\lambda_2$

Optical signal

Signal strength

Wavelength

$\theta_0$

$\theta_B$

First blazed grating

Second reflected light signal

Signal strength

$\lambda_2$ Wavelength

$\lambda_2 \pm \Delta\lambda_B$

First reflected light signal

Signal strength

$\lambda_2$ Wavelength

$\theta'_0$

$\theta'_B$

$\lambda_2 \pm \Delta\lambda_{BB}$

Second blazed grating

FIG. 5b

$\Lambda_i$

FIG. 6a

First reflected light signal

Signal strength

$\lambda_l$ Wavelength

$\lambda_l \pm \Delta \lambda_{AA}$

$\Lambda_1$

Fiber grating

Temperature $T_1$°C and a center wavelength $\lambda_1$

Second reflected light signal

Signal strength

$\lambda_l$ Wavelength

Light signal

Signal strength

Wavelength

$\theta_0$

$\theta_A$

$\lambda_l \pm \Delta \lambda_A$

First blazed grating

FIG. 6b

First reflected light signal

Signal strength

Wavelength

$\lambda_2$

$\lambda_2 \pm \Delta\lambda_{BB}$

$\Lambda_2$

Second reflected light signal

Signal strength

Wavelength

$\lambda_2$

Fiber grating

Light signal

Signal strength

Wavelength

$\theta_0$

$\theta_B$

$\lambda_2 \pm \Delta\lambda_B$

First blazed grating

Temperature $T_2°C$ and a center wavelength $\lambda_2$

FIG. 6c

EP 4 113 162 A1

Adhesive
layer                    PBS

S-polarized
light+P-polarized
light

P-polarized
light

S-polarized
light

FIG. 7a

Port 1                                    Port 2

Fiber circulator

Light
beam

Light
beam

Light
beam          Port 3

FIG. 7b

Optical focusing
component

FIG. 8a

Optical focusing
component

Fiber grating
array

d

Image-space
focal plane

f

FIG. 8b

FIG. 9

Concave-convex lens 1  Concave-convex lens 2  Double-convex lens 3

FIG. 10

Concave-
convex lens

FIG. 11

FIG. 12

Light splitting
component

Laser
beam

First
blazed
grating

Laser

Light beam emitting
component

Second
reflected
signal

Optical focusing
component

First
reflected
signal

Light
signal

First reflected
signal

Laser
beam

Detector
array

Focal plane

Second blazed
grating

Light signal

Light
signal

Light signal

Scanning
component

Light beam
receiving component

FIG. 13

FIG. 14

Laser detection system

Processor

FIG. 15

## INTERNATIONAL SEARCH REPORT

| International application No. |
|---|
| **PCT/CN2020/077277** |

**A. CLASSIFICATION OF SUBJECT MATTER**

G01S 7/491(2020.01)i

According to International Patent Classification (IPC) or to both national classification and IPC

**B. FIELDS SEARCHED**

Minimum documentation searched (classification system followed by classification symbols)

G01S

Documentation searched other than minimum documentation to the extent that such documents are included in the fields searched

Electronic data base consulted during the international search (name of data base and, where practicable, search terms used)

CNABS, CNTXT, VEN, USTXT, EPTXT, WOTXT: 激光雷达, 激光测距, 激光, 距离, 测距, 光栅, 背景, 环境, 影响, 干扰, LIDAR, laser, range, distance, grating, environment+, surroundings, background+

**C. DOCUMENTS CONSIDERED TO BE RELEVANT**

| Category* | Citation of document, with indication, where appropriate, of the relevant passages | Relevant to claim No. |
|---|---|---|
| X | WO 2019031328 A1 (PIONEER CORP.) 14 February 2019 (2019-02-14) description paragraphs 0013, 0020-0037 and figures 1-3 | 1-4, 11-13 |
| A | WO 2019031328 A1 (PIONEER CORP.) 14 February 2019 (2019-02-14) description paragraphs 0013, 0020-0037 and figures 1-3 | 5-10 |
| X | WO 2019017243 A1 (PIONEER CORP.) 24 January 2019 (2019-01-24) description, paragraphs 0027-0038 and figures 3-9 | 1-4, 11-13 |
| A | WO 2019017243 A1 (PIONEER CORP.) 24 January 2019 (2019-01-24) description, paragraphs 0027-0038 and figures 3-9 | 5-10 |
| X | CN 208654324 U (WUHAN KYLE OPTICS TECHNOLOGY CO., LTD.) 26 March 2019 (2019-03-26) description, paragraphs 0019-0024 and figures 1-3 | 1-4, 11-13 |
| X | CN 109188400 A (HESAI PHOTONICS TECHNOLOGY CO., LTD.) 11 January 2019 (2019-01-11) description, paragraphs 0043-0069 and figures 1-3 | 1-4, 11-13 |
| A | JP 2011203156 A (DAINIPPON SCREEN SEIZO KK.) 13 October 2011 (2011-10-13) entire document | 1-13 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 November 2020** | **26 November 2020** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2020/077277**

**C.      DOCUMENTS CONSIDERED TO BE RELEVANT**

| Category* | Citation of document, with indication, where appropriate, of the relevant passages | Relevant to claim No. |
|---|---|---|
| A | US 5200792 A (NEC CORPORATION) 06 April 1993 (1993-04-06)<br>entire document | 1-13 |
| A | US 2005068517 A1 (EVANS B. J. et al.) 31 March 2005 (2005-03-31)<br>entire document | 1-13 |
| A | CN 102323596 A (XI'AN UNIVERSITY OF TECHNOLOGY) 18 January 2012 (2012-01-18)<br>entire document | 1-13 |

Form PCT/ISA/210 (second sheet) (January 2015)

## INTERNATIONAL SEARCH REPORT
### Information on patent family members

International application No.

**PCT/CN2020/077277**

| Patent document cited in search report | | | Publication date (day/month/year) | Patent family member(s) | | | Publication date (day/month/year) |
|---|---|---|---|---|---|---|---|
| WO | 2019031328 | A1 | 14 February 2019 | US | 2020182980 | A1 | 11 June 2020 |
| | | | | EP | 3667360 | A1 | 17 June 2020 |
| | | | | JP | WO2019031328 | A1 | 06 August 2020 |
| WO | 2019017243 | A1 | 24 January 2019 | JP | WO2019017243 | A1 | 16 April 2020 |
| | | | | EP | 3657204 | A1 | 27 May 2020 |
| CN | 208654324 | U | 26 March 2019 | None | | | |
| CN | 109188400 | A | 11 January 2019 | WO | 2020073934 | A1 | 16 April 2020 |
| JP | 2011203156 | A | 13 October 2011 | None | | | |
| US | 5200792 | A | 06 April 1993 | JP | 2641945 | B2 | 20 August 1997 |
| | | | | EP | 0415405 | A2 | 06 March 1991 |
| | | | | EP | 0415405 | A3 | 10 June 1992 |
| | | | | EP | 0415405 | B1 | 20 March 1996 |
| | | | | DE | 69026008 | D1 | 25 April 1996 |
| | | | | DE | 69026008 | T2 | 01 August 1996 |
| | | | | JP | H0387607 | A | 12 April 1991 |
| US | 2005068517 | A1 | 31 March 2005 | US | 6882409 | B1 | 19 April 2005 |
| CN | 102323596 | A | 18 January 2012 | None | | | |

Form PCT/ISA/210 (patent family annex) (January 2015)